# EUROPEAN PATENT APPLICATION

(11) **EP 1 627 562 A1**
(43) Date of publication of application: **22.02.2006**
(21) Application number: 05255025.8
(22) Date of filing: 15.08.2005
(51) Int. Cl.: A01G 3/053, B25F 5/02

(54) **Hedge trimmer**

(30) Priority: 17.08.2004 GB 0418294; 15.11.2004 GB 0425127
(71) Applicant: Hartley, Brian, Chesterfield, Derbyshire S40 4DS (GB)
(72) Inventor: Hartley, Brian, Chesterfield, Derbyshire S40 4DS (GB)
(74) Representative: Parnham, Kevin

(57) **Abstract**

Use of electrical hedge trimmers above head height is difficult in view of the weight of the trimmer, position of handles and potential dangers with a cutting device. Nevertheless, at lower levels built in extension handles make trimmers cumbersome. The present trimmer has a readily attachable and detachable extension handle with separate operating switches and levers to allow more convenient use of an electrical hedge trimmer at elevated height as well as at normal levels. An electrical cable coupling between the extension handle and the main body of the hedge trimmer is arranged to be operable only when an extension handle is attached and becomes detached when the extension handle is removed or folded into a stored position.

## Description

This invention relates to hedge trimmers and more particularly trimmers for relatively tall hedges.

Hedge trimmers are used to cut the branches of hedges that require trimming.

Hedge trimmers play a vital part in maintaining and controlling hedges or bushes that require cutting to shape, or to a certain size, but problems may occur when they grow too high to reach. Step ladders or scaffolding may be required to reach them, and this may lead to accidents if the person standing on them should fall off. Preferably, hedge trimmers are convenient to use.

Although hedge shears are still used it will be understood the vast majority of hedges are now trimmed using electric hedge trimmers. These comprise overlapping blade combs with cutting edges whereby one comb is stationary and the other oscillates in order to cut branches swept or drawn into the gap between the oscillating teeth of the combs. An electric motor with cam drive is utilised in order to create the oscillatory motion between the combs for cutting purposes. Clearly, there is generally a correlation between the weight of the electric motor to drive the trimmer and the power of that motor to give sufficient force for the trimming action. In such circumstances for convenience a balance must be struck between the weight of the hedge trimmer and the length of the cutting combs as well as the weight of the motor used.

With respect to the trimming of tall hedges it will also be understood that this weight must be manipulated above a user's head so that those handle positions desirable for waist to shoulder height trimming may not be appropriate in terms of the extension possible for higher hedge trimming. As indicated above this leads to a necessity to use step ladders and other means to elevate the user to allow appropriate hedge trimming. Nevertheless, again the weight of the trimmer may be a factor with respect to the stability of the user on the step ladder leading to an increased danger of topple with the additional problem of a cutting implement such as a trimmer falling with that user should they topple from the step ladders.

The present invention aims to make the cutting of hedges and shrubs easier without the need for step ladders. The operator of the device can reach high hedges and because it can be adjusted they can also cut the top of a high hedge whilst they remain firmly on the ground.

In accordance with the present invention there is provided a hedge trimmer comprising a handle housing associated with a cutter assembly and a detachable extension handle, the handle housing and the extension handle respectively including switch means to independently control operation of the trimmer whereby, when the extension handle is coupled to the trimmer, operation of the trimmer may be performed solely by use of the switch means associated with the extension handle.

Preferably, the extension handle and the handle housing have reciprocal couplings to allow orientation adjustment between them and retention of that adjustment whilst the hedge trimmer is in operation. Typically, the adjustment is relative to the angle between the handle housing and the detachable extension handle. Generally, the reciprocal couplings provide a swivel association.

Typically, the handle housing includes a housing connector for an extension cable in order to supply electrical power to the hedge trimmer. Generally, the extension handle includes a plug connector to connect with the housing connector and an extension connector for an extension cable to supply electrical power to the hedge trimmer. Possibly, the extension handle includes an electrical battery to allow operation of the trimmer.

The extension handle can be adjusted after it is fitted to the main section of the hedge trimmer, and this allows it to be angled so that it can cut the top of a hedge. It can also be used to cut shapes in the hedge, bush or small trees to form topiary.

When the hedge trimmer is minus the extension handle it can be connected to the electrical supply using a cable with a plug and socket on it. It has its own switcher and wiring may be fitted to allow it to be operated independently when the extension handle is not fitted. The trimmer could also be battery operated and be fitted in a suitable position with its own socket and re-chargeable battery. The motor and accompanying switchgear would have to be suitable for Direct Current instead of AC mains if a battery is used. The housing of the hedge trimmer is shaped to allow it to accept the fitting of the extension handle and angle adjuster with suitable fixing holes.

The extension handle also has its own operating lever and switches to allow it to operate the hedge trimmer independently of the ones fitted in the main body. These are connected to allow dual operation; the hedge trimmer can be operated using the operating lever fitted to the extension handle. The handle on the extension device can be made to swivel to allow a better angle of grip to be achieved when using it.

Embodiments of the present invention will now be described by way of example only, and with reference to the accompanying drawings, in which:
Fig. 1 shows a first embodiment of a hedge trimmer viewed from one side,
Fig. 2 shows the hedge trimmer as depicted in Fig 1 but with a handle folded into a storage mode;
Fig. 3 is a side view showing the hedge trimmer as depicted in Fig 1 and Fig 2 with the extension handle removed; and,
Fig. 4 is a side view of a second embodiment of a hedge trimmer in accordance with the present invention.

As indicated above, use of electrically powered hedge trimmers is relatively well known. These trimmers provide convenience and ease with respect to trimming privet and other types of hedging both more accurately and rapidly. Although petrol engine driven trimmers are known as well as battery powered trimmers, principally electric hedge trimmers utilise a mains electricity supply provided through an extension lead so that there is an electrical coupling to the hedge trimmer. In such circumstances in terms of design for the hedge trimmer, compromises must be made with respect to weight and ease of convenience for the user against motor size and provision of extension handles. It will be understood that if an extension handle is provided that extension handle would provide no real benefit if it was still necessary to operate the hedge trimmer through switching associated with the base or normal handle housing for the hedge trimmer.

Although it is possible to provide extension handles for hedge trimmers, previously these have tended to be integral with the hedge trimmer and utilised to provide a counter balance for operation of the trimmer at height with the same switching mechanisms provided. Generally the extension handle has been formed as an integral part of the hedge trimmer such that even when not required a user is inconvenienced by the additional weight and more cumbersome nature of the hedge trimmer. The present hedge trimmer provides for an extension handle which is lightweight, detachable and allows for switching operation either at the base trimmer handle housing and/or through the extension handle itself. The extension handle also allows presentation of the cutting blades for the hedge trimmer at different angles or other orientations to facilitate elevated and hedge top cutting as required reducing the need for step ladders, etc.

The present hedge trimmer allows provision of the extension handle 15 with tubing 16 which is relatively easily removed from the base handle housing for the trimmer 2. Thus, the electrical flex may be directly coupled to the plug 42 to allow operation of the trimmer without the extension handle. More normally by use of relatively light materials it will be understood that the extension handle may remain attached so that a user can grip the trimmer 2 about the handle 4 with the trigger 37 and the handle 15 formed with the trigger 36 for an open trimming stance. However, when it is desired to use the trimmer above the user then simply the handle 15 with trigger 36 may be used whilst the user's other hand engages the tubing 16 in order to manipulate safely operation of the cutters of the trimmer 2.

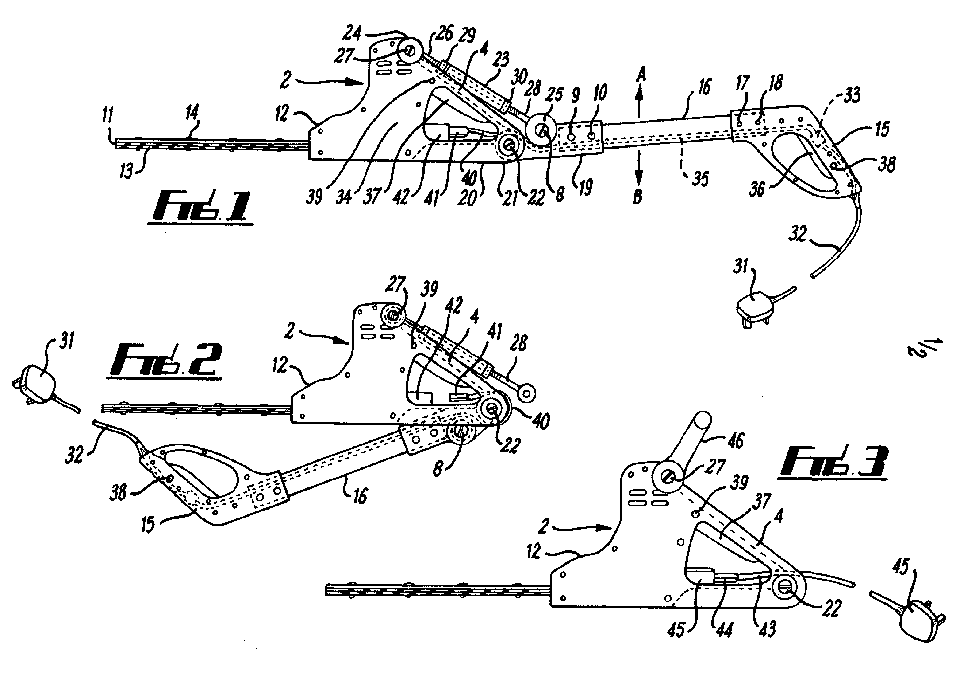

Fig. 1 shows a hedge trimmer 2, from the side with a conventional cutting blade 11, which is fixed to a main housing 12, of the trimmer, and also a second blade 13, which slides along the first blade 11, and is held in position by four or more screws 14. Both blades 11, 13 have sharpened edges and because the blade 13, is caused to slide backwards and forwards any branches or twigs are cut as they are trapped between the combs of the blades 11, 13. The means to drive the blade 13 is created by an electric motor and gearbox with a cam, and this is a well known action. The power supplied to the motor can be from the mains electricity supply, or by re-chargeable battery. The motor and gearbox are housed inside the trimmer 2.

An extension handle 15, is attached to a length of oval tubing 16, with two screws 17 and 18, the other end of the tubing 16, is fixed to a reciprocally shaped section 19 (made of a suitable material), by two screws 9 and 10. The other end of the section 19, is attached to a suitably shaped section of the trimmer 2, which has two extended arms 20 and 21 (only 20 is shown on drawing), these have holes in them and the section 19 which also has a hole in it is placed between the two extended arms 20 and 21. A bolt 22 is fitted through the holes and a wing nut (not shown) is used to secure the bolt 22. The inside of sections 20 and 21 is serrated and also the outer corresponding sides of section 19, this allows the section 19, and oval tubing 16, which is attached to it, to move up and down in the direction of arrows A or B, and is held in various positions as the wing nut is tightened or slackened.

To control this adjustment movement and make it more defined the trimmer 2, has an adjustable arm and this is fitted between the body of the trimmer 2, and the section 19. This fits between two holes, one in the body of the trimmer 2, at 24, and the second 25, in the shaped section 19, and is held in place by a wing nut (not seen) and bolt 8. A right hand threaded rod 26, with an eye on the end is placed between the section 24 and secured with a nut and bolt 27, another rod 28, with an eye on the end and threaded left hand, is placed between shaped section 19. The two rods 26 and 28, are coupled together by a thick walled tube 23, which is threaded internally, one half is threaded right hand and the other half left hand. This is then screwed onto the corresponding right hand threaded rod 26 and left hand threaded rod 28. Two locknuts 29 and 30 are screwed onto rods 26 and 28 to lock the tube 23, when tightened. To assist with this holes are drilled around the locknuts 26 and 28 and tube 23, so a tommy bar can be used to move them. The extension handle 15 and tube 16 is allowed to move up or down to alter the angle of the extension handle 15 to the cutting blade 11, in relation to it by turning and adjusting the tube 23, in conjunction with the screw 22.

The trimmer 2, has a plug head or handle connector 31, to couple it to the main electrical supply, through an electrical extension cable such as a flexible lead 32, which is connected to a switch 33, inside the handle 15, and a second switch 34, (not shown) inside the main body of the trimmer 2. Wiring 35, travels down the tubing 16, and the wiring 40, exits the end of the oval tubing 16, and is connected to a socket 41 this then fits into a plug or housing connector 42, fixed to the body or housing of the trimmer 2. This allows the two switches 33 and 34 to be interconnected, which allows the trimmer 2 to be operated independently of one another when the two triggers 36, 37 are operated separately. To control the accidental movement of the triggers 36, 37 generally two safety buttons 38 and 39 must be pressed before moving the corresponding trigger. These safety buttons may be of a press to operate and sustain type. Although not shown on the drawing in Fig 1, the handle 15 could be made to swivel on the tubing 16, to achieve a better angle when operating the device 2.

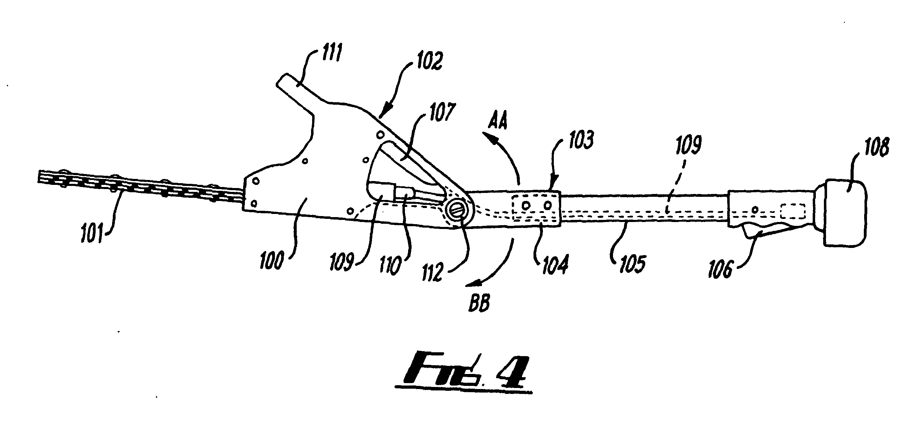

Fig. 2 shows the handle 15, and oval tubing 16, folded underneath the device trimmer in a stored mode. To achieve this a bolt 8, must be removed to detach rod 28, and then the bolt 8 replaced. The action of folding the handle underneath has the effect of stretching the cable 40 as it passes over screw 22, and this pulls the socket 41, out of the plug 42. This acts as a safety device if the trimmer 2 should be connected to the mains electricity supply whilst the handle 15 is folded

Fig. 3 shows the trimmer 2, with the handle 15, oval tube 16, and shaped section 19, removed. This allows the trimmer 2 to be used as a standalone small trimmer unit for lower bushes and hedges to be trimmed. After the bolt 22, has been removed to disconnect the shaped section together with the cable 40, and associate parts, the bolt 22 has to be replaced and held in position by a wing nut, a separate cable 43, together with plug head 45, and socket is then used to operate the trimmer 2, and this uses the bolt 22, as a guide to keep the cable 43, out of the way of the cutting blade of the device 2, when the socket 44 enters a plug 45.

A second handle 46, is normally connected to the device 2, using a bolt 27, and wing nut (not shown) to secure it. This gives the trimmer 2 extra stability when held with the hand, leaving the user's other hand to operate the trigger 37, of the trimmer 2.

It will be understood that the extension handle as indicated may be stored with the trimmer 2 or removed dependent upon user requirements. By the use of bolts and wing nuts such removal and interconnection can be rapidly achieved. Furthermore such couplings as bolts and wing nuts may be replaced through reciprocal shaping of appropriate parts of an extension handle and the handle housing for the trimmer such that there may be an entrant twist and lock association between these parts or other fixing such that appropriate mating between the connectors for the trimmer handle housing and the extension handle will be automatically made upon mating of the extension handle and the handle housing. It will also be understood that the electrical cable connection to the plug in the handle housing as well as the plug of the extension handle will normally be consistent so that the extension lead can be directly coupled to the truncated trimmer as depicted in Fig. 3 or to the extension handle as required. In such a way the trimmer can be operated with or without the extension handle fitted.

It will be understood that by provision of the extension handle in accordance with the present invention the cutter in terms of blades 11, 13 can be used at a greater height than with a conventional trimmer, that is to say one as depicted in Fig. 3. In such circumstances and with most hedging it will be understood that at least with respect to the side portions of that hedging it may not be necessary to utilize a foot stool or step ladder. Nevertheless, with regard to the tops of hedging, it will be appreciated that it is generally necessary to present the blades 11, 13 laterally. In order to achieve this effect the couplings between the handle housing and the extension handle will be rendered such that they can swivel into such a lateral presentation. Normally, it will be understood that the presentation between the handle housing and the extension handle should not be perpendicular as this will cause the user to be forced into conflict with the sides of the hedge. In such circumstances, normally the extension handle would be rendered such that it is slightly outward of the hedge and therefore the angle between the bottom of the handle housing and the extension handle will be greater than 90° and probably in the order of 120°. By such means it will be possible to provide manipulation of the blades 11, 13 at the top of the hedge with the user engaging the handle 15 and trigger 36 with one hand and holding the extension tubing 16 with the other for support and guidance. In these circumstances as described above it will be appreciated that the sizing of the cable coupling the connector 41 with the plug 42 will be such that although moved in the direction of arrowhead B (Fig. 1) the plugs do not become disconnected as described with respect to moving the extension handle into the storage mode depicted in Fig. 2.

It will be appreciated that it is particularly with respect to elevated use of the trimmer 2 in accordance with the present invention and presentation of the trimmer 4 cutting the top of hedges, that in accordance with the present invention operation independently by the trigger 36 remote from the switching of the main trimmer housing is important. By providing two independently operable switching systems it will be understood that the present invention allows more convenient operation of a trimmer with an extension handle without the user requiring access to switching in the main handle housing.

The extension handle in accordance with the present invention will be generally lightweight for operator convenience. It will be understood that particularly with elevated operation of a trimmer the weight of the trimmer is important in order to allow convenient and accurate operation of the trimmer. In such circumstances the tubing 16 will generally be made from a robust plastics material or extruded aluminium, whilst the handle 15 will be formed from a plastics material appropriately moulded to provide the trigger 36 as well as electrical connectors as required.

It will be understood that generally through appropriate wiring connections separate operability with respect to the triggers 36 and 37 will be achieved. Most current safety provisions relate to avoiding user accidents through contact with the blades 11, 13. It will be understood that with a user holding the trimmer 2 in the truncated form, that is to say without the extension handle as depicted in Fig. 3 that further safety features are required as the user will generally be closer to the cutting blade 11, 13. With respect to operation of the trimmer through the extension handle and in particular trigger 36, the user will then be more remotely placed with respect to the blades 11, 13 and therefore by implication, the possibility of accidents with those blades reduced at least with respect to injury to the user.

Fig. 4 illustrates a further alternative embodiment of the present invention. Thus, a hedge trimmer 102 comprises a handle housing 100 from which cutting blades 101 extend to allow a hedge to be trimmed. The housing 100 is associated through appropriate couplings 112 with an extension handle 103 which is adjustable in the direction of arrowheads AA, BB. The extension handle 103 comprises a coupling end 104 associated with the couplings of the housing 100 to allow the angular adjustment as described previously. The extension handle 103 also includes a tube 105 with a switch 106 to allow operation of the trimmer 102 through that switch 106, as previously the switch 106 generally takes the form of a trigger to allow independent operation of the trimmer 102. A further trigger switch 107 is provided in the housing 100 to allow operation of the trimmer 102 when the extension handle 103 is removed. In such circumstances the switches 106, 107 can independently operate the trimmer 102 as required.

In the embodiment depicted in Fig. 4 a rechargeable battery 108 is secured to the extension handle 103. In such circumstances, the trimmer 102 can be operated by the rechargeable battery 108 or another battery pack as required. It will also be understood that the re-chargeable battery could be attached directly to the trimmer handle housing 100 if required.

As previously, electrical couplings are provided in the form of a socket connector 109 to which a plug connector 110 is secured in use. In such circumstances an electrical motor used to drive the trimmer 102 can be arranged to operate upon the power supply from the battery 108 via electrical wiring 109 passing through the handle 103 and in particular the tube 105 as well as through an electrical power flex coupled to the socket connector 109 as required. In such circumstances the electrical power supply can be arranged to accommodate the AC main supply or the DC supply from the battery 108. Furthermore, and as is conventional with some commercial power tools, an electrical transformer may be provided to step down the mains electrical power for safety reasons and therefore coupling of an appropriate DC electrical current to the socket 109 will be provided by that electrical cable connection. It will also be understood that the handle housing 100 may be designed to accommodate a battery so that the trimmer can be operated by the battery or mains electricity directly or indirectly by in-situ charging of the battery whilst connected to the mains and electricity. The motor driving the trimmer must be able to operate using a DC supply from a battery or mains AC power with a transformer if required.

In the above circumstances the trimmer 102 may be configured to operate with the extension handle 103 connected as illustrated in Fig. 4 or if that extension handle 103 is removed so that the trimmer 102 can operate simply through the user engaging the grip and trigger 107 of the housing 100 as well as an integral grip handle 111. In either circumstance the switch triggers 106, 107 can operate the trimmer 102 independently allowing more flexible use of the trimmer 102 particularly for elevated trimming actions.

Although similar in operation to the trimmer described in Figures 1 to 3, removal of the extension handle 103 and tube 102 is facilitated in the embodiment shown in Figure 4 by the lack of an adjustment arm formed by the tube 23 (Figure 1). Thus, presentation of trimmer is dictated by the coupling 112 in terms of relative position between the handles 103, 111 and whether the extension handle 103 is connected at all. It will be noted that the coupling 112 will normally have serrated teeth that retain angular position with a butterfly nut to retain orientation but other retention mechanisms could be used for position as well as locking that orientation during operational use.

As described previously the extension handle 103 will generally be formed from lightweight materials such as plastics materials or extruded aluminium. The extension handle 103 will readily be removed from the trimmer 102 to avoid use of the trimmer with that extension handle when not required. Furthermore, as described previously the coupling 112 between the extension handle 103 and the handle housing 100 will allow variation in the orientation of these components to facilitate particularly cutting through the cutting blades 101 in a lateral direction, that is to say when attempting to cut the top of a hedge. In such circumstances the trimmer 102 with the extension handle 103 attached will enable cutting of a relatively tall hedge without the need for step ladders, etc.

It will be understood that manipulation of heavy equipment at elevated arms length positions can be tiresome and difficult. In such circumstances a trimmer 2, 102 in accordance with the present invention will be rendered as lightweight as possible. In such circumstances the cutter blades 11, 13, 101 may be made from at least in part for lightweight Titanium materials, and possibly designed to have a thinner section at the other end or even skeletal forms in order to reduce weight.

It will be understood that the tube 16, 105 may be made telescopic to provide further elevational extension as required by a particular user and necessary performance criteria. Alternatively, the tube 16, 105 may be secured to a part of the extension handle through detent type couplings such that different length tubes may be secured to other parts of the extension handle secured about the orientational adjustment coupling to the housing again to vary the extension length and therefore operational capability of the trimmer 102.

By the present invention a hedge trimmer is provided with a detachable extension handle. The switching means provided in the handle housing as well as in the extension handle may separately and independently operate the hedge trimmer such that there is a two way wiring system for operation of the trimmer. Furthermore as described above the electrical cable may be coupled directly to the handle housing or through the extension handle as required by appropriate mating of connectors therebetween. Normally a press and sustain switch will be provided for both the switch triggering at the handle housing as well as the extension handle ends. Clearly, when the extension handle is secured this will be the principal switching mechanism and normally if it is necessary to provide a master and slave switching configuration then the master switch will be provided on the extension handle.

As a safety feature when removed or moved into the stored mode the connectors between the handle housing and the extension handle will naturally be pulled out.

Typically the extension handle as indicated will substantially comprise a tubular component to provide elevation. However, where necessary and advantageous the extension handle may be bent or curved. As indicated above, in particular situations where the hedge trimmer is to be configured to cut the top of a hedge, it will be necessary to provide user manipulation room and provision of a bent or curved extension handle may allow such orientation more conveniently than with respect to a straight extension handle.

Typically the extension handle will have an oval tubular section for strength as well as grip. Clearly, with respect to electrical power it is important to provide safety features and in such circumstances the extension handle will normally be covered in an electrically non conductive sleeve. As indicated previously it is important to reduce waste and in such circumstances the relatively stable cutting blade may be formed from nylon whilst the oscillating cutting blade driven by an electric motor may be formed from a steel.

Modifications and alterations to the present invention will be appreciated by those skilled in the art. Thus, for example, as indicated by appropriate choice of wiring the extension handle switching may be arranged to supersede and isolate the handle housing switching such that when connected the extension handle prevents such independent operation of the handle housing switch. This may be through an appropriate interlock device.

Whilst endeavouring in the foregoing specification to draw attention to those features of the invention believed to be of particular importance, it should be understood that the Applicant claims protection in respect of any patentable feature or combination of features hereinbefore referred to and/or shown in the drawings, whether of not particular emphasis has been placed thereon.

## Claims

1. A hedge trimmer (2, 102) comprising a handle housing (4, 100) associated with a cutter assembly (11, 13; 101) and a detachable extension handle (15, 103), the handle housing including switch means and the extension handle including switch means to respectively independently control operation of the trimmer the extension handle having couplings to ensure operation is controlled by use of the switch means associated with the extension handle when attached to the trimmer.

2. A trimmer as claimed in claim 1 wherein the extension handle and the handle housing have reciprocal couplings to allow orientation adjustment between them and retention of that adjustment.

3. A trimmer as claimed in claim 2 wherein the adjustment is of an angle between the handle housing and the detachable extension handle.

4. A trimmer as claimed in claim 2 or claim 3 wherein the reciprocal couplings provide a swivel association.

5. A trimmer as claimed in any preceding claim wherein the handle housing includes a housing connector for an electrical extension cable.

6. A trimmer as claimed in any proceeding claim wherein the extension handle includes a plug connector to connect with the housing connector and an extension connector for an electrical extension cable.

7. A trimmer as claimed in any proceeding claim wherein the extension handle includes an electrical battery to allow operation of the trimmer.

8. A trimmer as claimed in any preceding claim wherein the extension handle includes an adjustor for adjustment when it is fitted to the hedge trimmer.

9. A trimmer as claimed in any preceding claim wherein the trimmer includes a socket for coupling to mains electricity or a battery.

10. A trimmer as claimed in any preceding claim wherein the trimmer includes switch gear to enable the trimmer to operate upon direct electrical current or alternating mains electrical current.

11. A trimmer as claimed in any preceding claim wherein the trimmer has a housing reciprocally shaped to the extension handle.

12. A trimmer as claimed in claim 11 wherein the reciprocal fitting of the extension handle includes means for angle adjustment comprising suitable reciprocal fitting holes in the extension handle and the housing.

13. A trimmer as claimed in any preceding claim wherein the extension handle Includes an operating lever and switches to allow operation of the trimmer independently of the handle housing.

14. Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.
